# EUROPEAN PATENT APPLICATION

(11) **EP 2 851 218 A1**
(43) Date of publication of application: **25.03.2015**
(21) Application number: 14184853.1
(22) Date of filing: 15.09.2014
(51) Int. Cl.: B60C 29/06, B60C 23/00

(54) **Tire inflation system having a pressure equalization valve assembly**

(30) Priority: 18.09.2013 US 201314029884; 09.10.2013 US 201314049846; 11.10.2013 US 201314051798; 11.10.2013 US 201314051847; 15.11.2013 US 201314080941
(71) Applicant: ArvinMeritor Technology, LLC, Troy, MI 48084 (US)
(72) Inventor: Koulinitch, Anatoli, Farmington Hills, MI Michigan 48334 (US); Trostle, Robert W, Royal Oak, MI Michigan 48073 (US); Honig, Jonathan, Bloomfield Hills, MI Michigan 48304 (US)
(74) Representative: Foot, Paul Matthew James

(57) **Abstract**

A tire inflation system for a vehicle. The tire inflation system may include a pressure equalization valve assembly that may receive the pressurized gas from a pressurized gas source and may control the flow of pressurized gas with respect to a first tire and a second tire.

## Description

### TECHNICAL FIELD

This patent application relates to a tire inflation system having a pressure equalization valve assembly.

### BACKGROUND

A dual tire pressure balance system is disclosed in U.S. Patent No. 6,457,502.

### SUMMARY

In at least one embodiment a tire inflation system for a vehicle is provided. The tire inflation system may include a pressurized gas source that supplies a pressurized gas and a pressure equalization valve assembly. The pressure equalization valve assembly may receive the pressurized gas from the pressurized gas source and may be fluidly connected to a first tire and a second tire. The pressure equalization valve assembly may permit the pressurized gas to flow between the first tire and the second tire to substantially equalize an inflation pressure of the first tire with an inflation pressure of the second tire.

In at least one embodiment a tire inflation system for a vehicle is provided. The tire inflation system may include a pressurized gas source that supplies a pressurized gas and a pressure equalization valve assembly. The pressure equalization valve assembly may receive the pressurized gas from the pressurized gas source via a delivery conduit and may be fluidly connected to a first tire and a second tire with first and second connection conduits, respectively. The pressure equalization valve assembly may inhibit pressurized gas from flowing between the first tire and the second tire when an inflation pressure of either the first tire or an inflation pressure of the second tire decreases by a threshold pressure drop amount.

In at least one embodiment a tire inflation system for a vehicle is provided. The tire inflation system may include a pressurized gas source, a pressure equalization valve assembly, an outlet valve, and an inlet valve. The pressurized gas source may be disposed on the vehicle and may be configured to provide a pressurized gas. The pressure equalization valve assembly may be fluidly connected to a first tire and a second tire and may control the flow of the pressurized gas to a first tire and a second tire. The outlet valve may be fluidly connected to the pressure equalization valve assembly and may control flow of the pressurized gas to the pressure equalization valve assembly. The inlet valve may be fluidly connected to the outlet valve. The inlet valve may control the flow of the pressurized gas from the pressurized gas source to the outlet valve. The pressure equalization valve assembly may open to permit the pressurized gas to flow to the first tire and the second tire when either an inflation pressure of the first tire or an inflation pressure of the second tire is less than a target tire pressure and the inlet valve and the outlet valve are open.

### BRIEF DESCRIPTION OF THE DRAWINGS

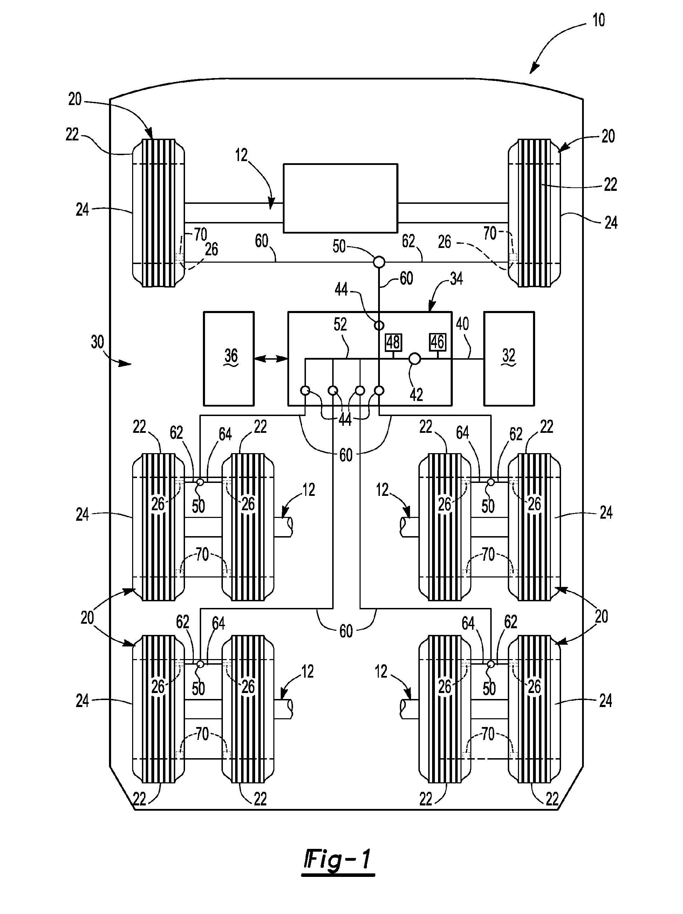

Figure 1 is a schematic of an exemplary vehicle having a tire inflation system.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Referring to Figure 1, an exemplary vehicle 10 is shown. The vehicle 10 may be of any suitable type, such as a motor vehicle like a truck, bus, farm equipment, military transport or weaponry vehicle, or cargo loading equipment for land, air, or marine vessels and may include a trailer in one or more embodiments.

The vehicle 10 may include a plurality of axles or axle assemblies 12 that may support and facilitate rotation of at least one wheel assembly 20. For clarity, a fragmentary portion of each axle assembly 12 is shown in Figure 1. An axle assembly 12 may or may not be configured as a drive axle that may provide torque to at least one associated wheel assembly 20. In addition, an axle assembly 12 may or may not be configured to steer the vehicle 10. An axle assembly 12 may be configured as or may include a steering knuckle assembly.

Each wheel assembly 20 may include at least one inflatable tire 22 that may be mounted on an associated wheel 24. Each tire 22 may have a tire valve 26 that may facilitate inflation of the tire 22. The tire valve 26 may have any suitable configuration. For example, the tire valve 26 may be configured as a Schrader valve in one or more embodiments. The tire valve 26 may extend through a hole in an associated wheel 24 and may be configured to provide pressurized gas to a tire chamber that may be at least partially defined by the tire 22 and the wheel 24. Each tire valve 26 may be normally closed to inhibit pressurized gas from exiting the tire 22 through the tire valve 26; however, the tire valve 26 may be held in an open position when coupled to a tire inflation system 30 as will be discussed in more detail below. As such, the tire valve 26 may be open when properly coupled to the tire inflation system 30 and may close when the tire valve 26 is disconnected from the tire inflation system 30. In Figure 1, the tire valve locations are generalized for illustration purposes and are not intended to be limiting.

The tire inflation system 30 may be mounted on the vehicle 10. The tire inflation system 30 may monitor or determine tire pressure and may inflate one or more tires 22. More specifically, the tire inflation system 30 may be configured to provide a pressurized gas or pressurized gas mixture to one or more tires 22. For clarity, the term "pressurized gas" may refer to a pressurized gas or a pressurized gas mixture in this application. The tire inflation system 30 may include a pressurized gas source 32, a gas supply subsystem 34, and a control system 36.

The pressurized gas source 32 may be configured to supply and/or store a volume of a pressurized gas or pressurized gas mixture, such as air and/or nitrogen. For example, the pressurized gas source 32 may include a tank and/or a pump like a compressor that may be driven by a vehicle engine or vehicle power source. The pressurized gas source 32 may be disposed on the vehicle 10 and may be configured to provide a pressurized gas or pressurized gas mixture at a pressure that is greater than or equal to a target tire pressure or a target inflation pressure of a tire 22.

The gas supply subsystem 34 may fluidly connect the pressurized gas source 32 to one or more tires 22. The gas supply subsystem 34 may include one or more conduits 40, such as a hose, tubing, pipe, or combinations thereof, which may provide pressurized gas to at least one tire 22 via a corresponding tire valve 26. In at least one embodiment, the gas supply subsystem 34 may include an inlet valve 42, at least one outlet valve 44, a first pressure sensor 46, a second pressure sensor 48, and at least one pressure equalization valve assembly 50.

The inlet valve 42 may control the flow of pressurized gas from the pressurized gas source 32. More specifically, the inlet valve 42 may enable or disable the flow of pressurized gas from an outlet of the pressurized gas source 32 to at least one outlet valve 44. Operation of the inlet valve 42 may be controlled by the control system 36. For instance, the inlet valve 42 may include or may be controlled by an actuator, such as solenoid, that may actuate the inlet valve 42 between an open position and a closed position. In the open position, pressurized gas may flow from the pressurized gas source 32 to a manifold 52. The manifold 52 may be disposed between the inlet valve 42 and one or more outlet valves 44 and may distribute pressurized gas to at least one delivery conduit 60. In the closed position, pressurized gas may be inhibited from flowing from the pressurized gas source 32 to the manifold 52. In at least one embodiment, the inlet valve 42 may be normally closed under predetermined operating conditions, such as when the vehicle 10 is not operational or turned off or when the vehicle engine is not running. As such, the inlet valve 42 may inhibit depressurization of the pressurized gas source 32 in the event of a downstream leak.

The outlet valve 44 may control the flow of pressurized gas to a pair of tires 22. More specifically, the outlet valve 44 may enable or disable the flow of pressurized gas from the manifold 52 to a delivery conduit 60 and to the pressure equalization valve assembly 50 and an associated tire 22. In Figure 1, five outlet valves 44 are shown, although it is contemplated that a greater or lesser number of outlet valves 44 may be provided. The outlet valves 44 may be associated with different tires 22 and different delivery conduits 60. Moreover, each outlet valve 44 may be actuated independently of the inlet valve 42 and independently of each other. As such, the inflation and pressure assessment of different tires 22 or sets of tires 22 may be independently controlled. Operation of the outlet valve 44 may be controlled by the control system 36. For instance, the outlet valve 44 may include or may be controlled by an actuator, such as solenoid, that may actuate the outlet valve 44 between an open position and a closed position. In the open position, pressurized gas may flow from the manifold 52 through the delivery conduit 60 and to a corresponding pressure equalization valve assembly 50. In the closed position, pressurized gas may be inhibited from flowing from the manifold 52 to a corresponding pressure equalization valve assembly 50. As such, pressurized gas may not be constantly provided to one or more tires 22, which may facilitate the use of pressure pulses to determine tire pressure. In addition, the outlet valve 44 may allow a delivery conduit 60 to be vented to the surrounding environment between the outlet valve 44 and a corresponding pressure equalization valve assembly 50. In at least one embodiment, the outlet valve 44 may be normally closed under predetermined operating conditions, such as when the vehicle 10 is not operational or turned off or when the vehicle engine is not running.

The first pressure sensor 46 may be configured to detect the pressure of the pressurized gas provided by the pressurized gas source 32. The first pressure sensor 46 may be of any suitable type and may be fluidly connected to the pressurized gas source 32. For example, the first pressure sensor 46 may be fluidly connected to the pressurized gas source 32 between the pressurized gas source 32 and the inlet valve 42.

The second pressure sensor 48 may be configured to detect the pressure of the pressurized gas provided to a tire 22 and/or the pressure equalization valve assembly 50. The second pressure sensor 48 may be of any suitable type. The second pressure sensor 48 may be disposed between the inlet valve 42 and the tire valve 26 and may be fluidly connected to the manifold 52. As such, the second pressure sensor 48 may be isolated from the pressurized gas source 32 by closing the inlet valve 42. In at least one embodiment, the second pressure sensor 48 may be disposed between the inlet valve 42 and one or more outlet valves 44 so that the second pressure sensor 48 may be used to detect the pressure of pressurized gas supplied to different tires. Alternatively, multiple second pressure sensors 48 may be provided that may detect the pressure supplied to a particular conduit 40 or particular tire 22.

A pressure equalization valve assembly 50 may be configured to receive pressurized gas from the pressurized gas source 32 via a delivery conduit 60 and control the flow of pressurized gas. The pressure equalization valve assembly 50 may be fluidly connected to a pair of tires 22. These tires 22 may be referred to as a first tire and a second tire for convenience in reference. In the text below, the positions of the first tire and the second tire are exemplary and may be interchanged in a given pair of tires 22.

The first tire and the second tire may be disposed on different wheels 24 as is shown with the wheel assemblies 20 located near the top of Figure 1. As such, the pressure equalization valve assembly 50 may be fluidly connected to different wheel assemblies 20 that may be disposed on different axles of a common axle assembly 12. In addition, the first tire and second tire may be disposed on a common wheel 24, as is shown with the four dual tire wheel assemblies 20 shown near the bottom of Figure 1. The first and second tires or each tire in a pair of tires 22 may have the same target tire pressure in one or more embodiments.

The pressure equalization valve assembly 50 may be fluidly connected to the first tire via a first connection conduit 62. The pressure equalization valve assembly 50 may be fluidly connected to the second tire via a second connection conduit 64. The first connection conduit 62 and the second connection conduit 64 may be configured to depress or open an associated tire valve 26 when installed on the tire valve 26 in one or more embodiments.

The pressure equalization valve assembly 50 may provide one or more of the following functions. First, the pressure equalization valve assembly 50 may facilitate the flow of pressurized gas between the first and second tires to help balance the pressure between the tires. Second, the pressure equalization valve assembly 50 may terminate the flow of pressurized gas between the first and second tires when the pressure of a tire decreases by more than a threshold pressure drop amount. Third, the pressure equalization valve assembly 50 may permit pressurized gas to flow to at least one tire when a tire is underinflated. Fourth, the pressure equalization valve assembly 50 may provide check valve functionality to inhibit backflow of pressurized gas toward the pressurized gas source 32. These functions are discussed in more detail below.

The pressure equalization valve assembly 50 may permit pressurized gas to flow between a first tire and a second tire. More specifically, the pressure equalization valve assembly 50 may open in response to force exerted by the pressurized gas when a pressure differential exists between the first tire and the second tire to permit pressurized gas to flow from the tire having higher pressure to the tire having lower pressure. As such, the pressure equalization valve assembly 50 may permit the inflation pressure of the first tire to substantially equalize with the inflation pressure of the second tire, notwithstanding design tolerances of the pressure equalization valve assembly 50 that may affect when the pressure equalization valve assembly 50 may open. In addition, the first connection conduit 62 and the second connection conduit 64 may be in fluid communication with each other via the pressure equalization valve assembly 50 when pressurized gas does not enter the pressure equalization valve assembly 50 via the delivery conduit 60.

The pressure equalization valve assembly 50 may inhibit pressurized gas from flowing between the first tire and the second tire when the inflation pressure of either the first tire or the inflation pressure of the second tire decreases by a threshold pressure drop amount. As such, the pressure equalization valve assembly 50 may help maintain the pressure of at least one tire 22 in a pair when the other tire 22 experiences a major pressure drop, such as a tire blowout that may not permit tire inflation pressure to be maintained. For example, if the first tire experiences a major leak or a blowout, then the pressure equalization valve assembly 50 may initially permit pressurized gas to flow from the second tire to the first tire. The pressure equalization valve assembly 50 may terminate the flow of pressurized gas from the second tire to the first tire when the inflation pressure of the first tire and/or the inflation pressure of the second tire decreases by a threshold pressure drop amount. The threshold pressure drop amount may be a predetermined value that may be based on tire attributes or vehicle development testing. In at least one embodiment, the threshold pressure drop amount may be a constant value, such as approximately 20 psi (137.9 kPa). In addition, the threshold pressure drop amount may be measured with respect to a target tire inflation pressure that may be indicative of a desired inflation pressure of the tire 22. As such, the pressure equalization valve assembly 50 may inhibit the flow of pressurized gas between the tires 22 when the inflation pressure of a tire is less than the threshold pressure drop amount. The inflation pressure of a tire 22 may be detected in various ways, such as with the second pressure sensor 48 or a tire pressure sensor 70 that may be disposed inside the tire 22 or inside a tire chamber that receives the pressurized gas. Such a tire pressure sensor 70 may wirelessly communicate with the control system 36 and may provide a signal or data that is indicative of the inflation pressure of the tire 22 to the control system 36. Tire pressure may also be indirectly detected with a pressure sensor that is disposed outside the tire as is described in U.S. Patent Application No. 14/029,884, the disclosure of which is hereby incorporated by reference in its entirety.

The pressure equalization valve assembly 50 may be configured to permit pressurized gas to flow from the pressurized gas source 32 to a tire 22. The flow of pressurized gas may be enabled by opening the inlet valve 42 and an outlet valve 44 associated with the pressure equalization valve assembly 50 to provide pressurized gas to a corresponding delivery conduit 60 as previously discussed. For example, the pressure equalization valve assembly 50 may open in response to force exerted by the pressurized gas when the pressure in the delivery conduit is greater than a downstream pressure in a tire 22, the first connection conduit 62, and/or the second connection conduit 64. As such, pressurized gas may flow to the first tire and/or the second tire when the inflation pressure of the first tire and/or the inflation pressure of the second tire are less than the target tire pressure. The target tire pressure may be a predetermined value that may be based on the make and model of the tire and/or vehicle development testing. In addition, the target tire pressure may account for design tolerances of the pressure equalization valve assembly 50 such as the tolerance range associated with opening the pressure equalization valve assembly 50.

The pressure equalization valve assembly 50 may act as a check valve to inhibit pressurized gas from flowing from the first tire and/or from the second tire to the pressurized gas source 32. Check valve functionality may be integrated with the portion of the pressure equalization valve assembly 50 that permits or inhibits the flow of pressurized gas between the first and second tires or may be separate from the portion of the pressure equalization valve assembly 50 that permits or inhibits the flow of pressurized gas between the first and second tires. The pressure equalization valve assembly 50 may inhibit pressurized gas from flowing from the first tire and/or the second tire into the delivery conduit 60 or toward the pressurized gas source 32 when the pressure equalization valve assembly 50 permits pressurized gas to flow between the first tire and the second tire. As such, the pressure equalization valve assembly 50 may inhibit backflow and potential tire pressure loss due to a leak or reduced pressure upstream from the pressure equalization valve assembly 50.

The control system 36 may monitor and control operation of the tire inflation system 30. The control system 36 may include one or more electronic controllers or control modules that may monitor and/or control various components of the tire inflation system 30. For example, the control system 36 may be configured to control actuation of the inlet valve 42 and the outlet valve 44 to control the flow of pressurized gas. In addition, the control system 36 may be configured to receive data from the first pressure sensor 46, the second pressure sensor 48, and/or the tire pressure sensor 70, if provided, that may be indicative of pressure. In Figure 1, communication between the control system 36 and the first and second pressure sensors 46, 48 is represented by the double arrowed line that is located adjacent to the control system 36.

The tire inflation system 30 in conjunction with the pressure equalization valve assembly 50 may allow the control system 36 to more accurately measure and maintain the inflation pressure of fluidly connected tires 22. More specifically, tire pressures measurements may be inaccurate when tire pressures are substantially different and a single pressure sensor is used to detect pressure in a configuration in which two tires are connected to a common pressurized gas delivery conduit without a pressure equalization valve assembly 50. For example, tire pressure measurements may be inaccurate when a first tire is overinflated and a second tire is underinflated and the first and second tires are fluidly connected to a common delivery conduit without a pressure equalization valve. Providing pressurized gas based on such an inaccurate pressure measurement may further increase the pressure in the overinflated tire and not provide sufficient pressurized gas to the underinflated tire to achieve the target tire pressure. As such, tire pressure equalization and independent flow rate control may not be attained without a pressure equalization valve assembly 50 even when two tires receive pressurized gas from a common supply conduit.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A tire inflation system for a vehicle, comprising:
a pressurized gas source that supplies a pressurized gas; and
a pressure equalization valve assembly that receives the pressurized gas from the pressurized gas source and that is fluidly connected to a first tire and a second tire;
wherein the pressure equalization valve assembly permits the pressurized gas to flow between the first tire and the second tire to substantially equalize an inflation pressure of the first tire with an inflation pressure of the second tire.

2. The tire inflation system of claim 1 wherein the pressure equalization valve assembly inhibits the pressurized gas from flowing from the first tire and the second tire to the pressurized gas source.

3. The tire inflation system of claim 1 or 2 wherein the pressure equalization valve assembly inhibits pressurized gas from flowing from the first tire to the pressurized gas source when the pressure equalization valve assembly permits the pressurized gas to flow between the first tire and the second tire.

4. The tire inflation system of claim 3 wherein the pressure equalization valve assembly inhibits pressurized gas from flowing from the second tire to the pressurized gas source when the pressure equalization valve assembly permits the pressurized gas to flow between the first tire and the second tire.

5. The tire inflation system of any preceding claim wherein the pressure equalization valve assembly is fluidly connected to a tire valve of the first tire via a first connection conduit and fluidly connected to a tire valve of the second tire via a second connection conduit.

6. The tire inflation system of any preceding claim;
wherein the pressure equalization valve assembly inhibits pressurized gas from flowing between the first tire and the second tire when an inflation pressure of either the first tire or an inflation pressure of the second tire decreases by a threshold pressure drop amount.

7. The tire inflation system of any preceding claim wherein the pressure equalization valve assembly permits the pressurized gas to flow between the first tire and the second tire when the inflation pressure of the first tire or the inflation pressure of the second tire does not decrease by the threshold pressure drop amount.

8. The tire inflation system of claim 7 wherein the pressure equalization valve assembly permits the pressurized gas to flow between the first tire and the second tire when the pressure equalization valve assembly does not receive pressurized gas from the pressurized gas source.

9. The tire inflation system of any preceding claim wherein the pressure equalization valve assembly permits the pressurized gas to flow between the first tire and the second tire when the pressure equalization valve assembly inhibits pressurized gas from flowing from the pressurized gas source to the first tire and the second tire.

10. The tire inflation system of any preceding claim wherein the pressure equalization valve assembly opens to permit pressurized gas to flow from the pressurized gas source to the first tire and the second tire when the inflation pressure of the first tire and/or the inflation pressure of the second tire is less than a target tire pressure.

11. The tire inflation system of claim 5 wherein the first connection conduit and the second connection conduit are in fluid communication when pressurized gas does not enter the pressure equalization valve assembly via a delivery conduit that fluidly connects the pressurized gas source to the pressure equalization valve.

12. The tire inflation system of any preceding claim further comprising
an outlet valve that is fluidly connected to the pressure equalization valve assembly, wherein the outlet valve controls flow of the pressurized gas to the pressure equalization valve assembly; and
an inlet valve that is fluidly connected to the outlet valve, wherein the inlet valve controls flow of the pressurized gas from the pressurized gas source to the outlet valve;
wherein the pressure equalization valve assembly permits the pressurized gas to flow to the first tire and the second tire when either an inflation pressure of the first tire or an inflation pressure of the second tire is less than a target tire pressure and the inlet valve and the outlet valve are open.

13. The tire inflation system of claim 12 wherein the pressure equalization valve assembly does not receive pressurized gas from the pressurized gas source when the inlet valve or outlet valve are closed.

14. The tire inflation system of any preceding claim wherein the pressure equalization valve assembly inhibits pressurized gas from flowing between the first tire and second tire when the inflation pressure of either the first tire or the inflation pressure of the second tire decreases by a threshold pressure drop amount measured with respect to a target tire pressure.

15. The tire inflation system of claim 12 or 13 further comprising:
a first pressure sensor for detecting pressure of the pressurized gas provided by the pressurized gas source; and
a second pressure sensor disposed between the inlet valve and the outlet valve;
wherein the second pressure sensor detects pressure of the pressurized gas provided to pressure equalization valve assembly.
